# EUROPÄISCHE PATENTANMELDUNG

(11) **EP 4 194 834 A1**
(43) Veröffentlichungstag der Anmeldung: **14.06.2023**
(21) Anmeldenummer: 22211805.1
(22) Anmeldetag: 06.12.2022
(51) Int. Cl.: G01M 9/02, G01M 17/007, G09B 9/058, G09B 9/042

(54) **ROLLENPRÜFSTAND**

(30) Priorität: 13.12.2021 DE 102021132845
(71) Anmelder: Speiser, Richard, 87490 Börwang (DE)
(72) Erfinder: Richard, Speiser, 87490 Börwang (DE)
(74) Vertreter: Hoppe, Lars

(57) **Zusammenfassung**

Rollenprüfstand für Motoräder mit Verbrennungsmotor, aufweisend eine Aufnahmeeinheit, mindestens eine Befestigungseinheit, eine Bedieneinheit, eine Steuereinheit und eine Walze zur Aufnahme der Umfangsgeschwindigkeit eines Motorrad-Hinterrades, wobei der Rollenprüfstand eine Strömungseinheit aufweist, die ihrerseits eine Antriebseinheit, einen Diffusor und eine, in Strömungsrichtung nach dem Diffusor angeordnete, Ausströmeinheit aufweist, wobei der Diffusor und die Ausströmeinheit einen im Betriebszustand gasführenden Strömungskanal bilden, wobei der Diffusor von der Antriebseinheit antreibbar ist, wobei die Steuereinheit die Antriebseinheit in Abhängigkeit von der Umfangsgeschwindigkeit der Walze so ansteuernd ist, dass eine Geschwindigkeit des im Betriebszustand aus der Ausströmeinheit austretenden Gases mindestens ab einer Umfangsgeschwindigkeit von 150 km/h im Wesentlichen gleich der Umfangsgeschwindigkeit ist sowie ein Verfahren zum Anströmen eines auf einem Rollenprüfstandes befindlichen Motorrades mit Verbrennungsmotor.

## Beschreibung

Die vorliegende Erfindung betrifft einen Rollenprüfstand für Motoräder mit Verbrennungsmotor, aufweisend eine Aufnahmeeinheit, mindestens eine Befestigungseinheit, eine Bedieneinheit, eine Steuereinheit und eine Walze zur Aufnahme der Umfangsgeschwindigkeit eines Motorrad-Hinterrades, wobei der Rollenprüfstand eine Strömungseinheit aufweist sowie ein Verfahren zum Anströmen eines auf einem Rollenprüfstandes befindlichen Motorrades mit Verbrennungsmotor.

Zur Optimierung einer Abstimmung sämtlicher Einheiten eines Motorrades mit Verbrennungsmotor sind Rollenprüfstände bekannt, mittels welchen ein reales Fahren ortsfest simuliert wird. Die zur Abstimmung notwendigen Messwerte werden über Sensoren erfasst und in Echtzeit angezeigt oder weiter verarbeitet. Es ist auch bekannt, ein Motorrad während einer Straßenfahrt mit einer Sensorbox zur Messwertaufnahme auszustatten. Dies ist jedoch nachteilig, da die Echtzeitmessung konstruktiv erschwert ist und Sensoren sowie Motorrad und Fahrer den oftmals nicht ungefährlichen Umwelteinflüssen ausgesetzt sind, die zu Beschädigungen oder gar Verletzungen führen können.

Supersportmotorräder weisen zur Leistungssteigerung häufig eine Airbox auf, welche im vorderen Bereich des Motorrades angeordnet ist und einen, durch den Fahrtwind ab einer Umfangsgeschwindigkeit der Räder von rund 150 km/h erzeugten, Staudruck aufnimmt, um so die Einspritzung in den Motor zu optimieren. Eine solche Leistungssteigerung ist auf einem herkömmlichen Rollenprüfstand nicht simulierbar, so dass keine optimale Abstimmung der Einheiten eines Motorrades möglich ist.

Aus dem Stand der Technik sind zur Abbildung des Luftwiderstandes und eines Staudruckes Windkanäle bekannt, in die der gesamte Rollenprüfstand inklusive Motorrad eingebracht werden. Diese Windkanäle weisen einen hohen Platzbedarf auf, sind kostenintensiv und können keine schnellen Änderungen des Luftstromes erzeugen.

Die vorliegende Erfindung stellt sich daher die Aufgabe, einen eine Realität möglichst genau abbildenden, dynamischen, platzsparenden und kostengünstigen Rollenprüfstand für Motorräder mit Verbrennungsmotor vorzuschlagen.

Diese Aufgabe wird gelöst durch einen Rollenprüfstand für Motoräder mit Verbrennungsmotor, aufweisend eine Aufnahmeeinheit, mindestens eine Befestigungseinheit, eine Bedieneinheit, eine Steuereinheit und eine Walze zur Aufnahme der Umfangsgeschwindigkeit eines Motorrad-Hinterrades, wobei der Rollenprüfstand eine Strömungseinheit aufweist, die ihrerseits eine Antriebseinheit, einen Diffusor und eine, in Strömungsrichtung nach dem Diffusor angeordnete, Ausströmeinheit aufweist, wobei der Diffusor und die Ausströmeinheit einen im Betriebszustand gasführenden Strömungskanal bilden, wobei der Diffusor von der Antriebseinheit antreibbar ist, wobei die Steuereinheit die Antriebseinheit in Abhängigkeit von der Umfangsgeschwindigkeit der Walze so ansteuernd ist, dass eine Geschwindigkeit des im Betriebszustand aus der Ausströmeinheit austretenden Gases mindestens ab einer Umfangsgeschwindigkeit von 150 km/h im Wesentlichen gleich der Umfangsgeschwindigkeit ist.

Die Aufnahmeeinheit ist vorteilhaft derart ausgebildet, dass sämtliche Komponenten des Rollenprüfstandes sowie ein Motorrad im Betriebszustand an ihr anordenbar oder aufnehmbar sind, wobei das Motorrad mittels der mindestens einen Befestigungseinheit fixierbar ist. Die Befestigungseinheit nimmt im Betriebszustand das Vorderrad des Motorrades auf und verhindert so dessen Wegrollen. Die Bedieneinheit definiert das Human Machine Interface, wobei dieses die von einem Nutzer eingegebenen Signale an die Steuereinheit weiterleitet und die Steuereinheit eine Vielzahl an Einheiten des Rollenprüfstandes steuert. Die Walze weist in vorteilhafter Weise eine Oberflächenrauheit auf, welche der einer üblichen Straße gleichkommt, und ist derart gelagert, dass der Rollwiderstand und das Abrollverhalten des darauf befindlichen Hinterrades möglichst der Realität nahekommen. In vorteilhafter Weise sind die Rotationsachsen des Hinterrades sowie der Walze parallel zueinander angeordnet, besonders bevorzugt liegen die beiden Rotationsachsen in einer gemeinsamen rein vertikalen Ebene. Auch eine schräge Anordnung der beiden Rotationsachsen zueinander ist erfindungsgemäß, um insbesondere ein Fahrszenario mit einer Steigung oder einer Kurvenfahrt zu simulieren. Die Strömungseinheit simuliert in besonders vorteilhafter Weise den in der Realität am Motorrad ankommenden Luftwiderstand, indem sie ein Gas auf ein stehendes Motorrad zubewegt, anstatt das Motorrad in Umgebungsluft zu bewegen. Hierdurch wird der Staudruck innerhalb der Airbox simuliert. Ein Gasstrom wird mittels des von der Antriebseinheit angetriebenen Diffusors erzeugt. Der Gasstrom tritt über die Ausströmeinheit in die Umgebung aus. Über die durch einen Sensor - bevorzugt ein Drehgeber - gemessene Kreisfrequenz der Walze wird die Umfangsgeschwindigkeit der Walze berechnet. Diese entspricht der Umfangsgeschwindigkeit des Motorrad-Hinterrades. Da das Motorrad stillsteht, ist der zu simulierende Luftwiderstand vollständig auf eine Geschwindigkeit des aus der Ausströmeinheit austretenden Gases so zu übertragen, dass die Geschwindigkeit des ausströmenden Gases der Umfangsgeschwindigkeit entspricht. Eine Abweichung der Geschwindigkeit des austretenden Gases zur Umfangsgeschwindigkeit von maximal 5%, vorteilhafterweise von maximal 3,5 %, besonders bevorzugt von maximal 1% ist ebenfalls erfindungsgemäß. Auf Grund des steigenden Einflusses des Luftwiderstandes bei steigender Umfangsgeschwindigkeit ist eine derartige Genauigkeit ab einer Geschwindigkeit von 150 km/h vorteilhaft. Erfindungsgemäß ist auch die Regelung der austretenden Gasgeschwindigkeit in Abhängigkeit von der Umfangsgeschwindigkeit der Walze über das gesamte Umfangsgeschwindigkeitsspektrum. Eine Kaskadenregelung oder ein Frequenzumrichter sind hierzu in der Steuereinheit vorgesehen.

In Weiterbildung der Erfindung ist vorgesehen, dass die Strömungseinheit eine in Strömungsrichtung vor dem Diffusor angeordnete Filtereinheit aufweist, wobei die Filtereinheit und/oder die Ausströmeinheit lösbar mit dem Diffusor verbindbar sind. Die Filtereinheit ist vorteilhaft als Partikelfilter ausgebildet, sodass ein Festsetzen des Diffusors auf Grund von Schmutzansammlungen vermieden und die Störanfälligkeit verringert sind. Die Filtereinheit bildet einen Teil des gasführenden Strömungskanals und ist derart am Diffusor angeordnet, dass der Gasstrom direkt und möglichst ohne Krümmungen, also mit möglichst geringen Strömungsverlusten zu dem Diffusor gelangt. Das Eintreten des Gases durch den Filter ist vorteilhaft erleichtert, sodass eine Antriebseinheit zum Antreiben des Diffusors möglichst klein gewählt werden kann, was den Bauraum sowie die Kosten mit Vorteil verringert. Zum Austauschen oder Instandhalten sind die Filtereinheit und/oder die Ausströmeinheit lösbar mit dem Diffusor verbindbar. Die lösbare Verbindung ist bevorzugt über eine Klemmverbindung, welche eine umfänglich gleichmäßige Verbindung aufweist, ausgebildet. Auch eine andere Art der kraft- oder formschlüssigen Verbindung sind erfindungsgemäß.

Die Ausströmeinheit weist bevorzugt einen kreisrunden Querschnitt und eine Länge von mindestens 0,3 m, vorzugsweise mindestens 0,5 m auf. Eine derartige Ausbildung ist vorteilhaft, da sie den Gasstrom beruhigt und ein gleichmäßiges Austreten des Gases aus der Strömungseinheit gewährleistet. Je länger die Ausströmeinheit ausgebildet ist, desto geringer wird der Antail möglicherweise auftretender turbulenter Strömungen. Anderersist ist eine Ausströmeinheit mit möglichst geringer Länge sinnvoll, um den Bauraum möglichst gering zu halten. Erfindungsgemäß weist die Ausströmeinheit daher eine maximale Länge von 3 m, bevorzugt von 2 m, ganz besonders bevorzugt von 1,5 m auf.

In Ausgestaltung der Erfindung ist vorgesehen, dass die Ausströmeinheit einen Laminarfilter aufweist, wobei der Laminarfilter an einem, vom Diffusor entfernten, Ende der Ausströmeinheit angeordnet ist, wobei der Laminarfilter oder die Ausströmeinheit an einem Gasaustrittsende eine gekrümmte Fläche aufweist. Der Laminarfilter beruhigt in vorteilhafter Weise den Gasstrom ergänzend zur Ausströmeinheit, wobei der Laminarfilter vorteilhaft mehrere parallel zum Gasstrom angeordnete Durchgangsöffnungen aufweist. Der Laminarfilter weist mindestens 10 %, vorteilhaft mindestens 20 %, besonders vorteilhaft mindestens 30 % der Länge der Ausströmeinheit auf und ist in dieser aufnehmbar. Das Gasaustrittsende weist eine gekrümmte Fläche auf, um beim Austritt des Gases aus der Strömungseinheit entstehende Turbulenzen durch den Strömungsabbruch bestmöglich nach außen zu transportieren, um einen auf das, in einem Betriebszustand auf dem Rollenprüfstand befindliche, Motorrad gerichteten Hauptgasstrom davon unbeeinflusst zu lassen.

Darüber hinaus ist in vorteilhafter Weise zwischen Filtereinheit und Diffusor und zwischen Diffusor und Ausströmeinheit mindestens eine Dichtungseinheit angeordnet. Die Dichtungseinheit verhindert das Eintreten ungefilterten Gases in den Strömungskanal, so dass auch Turbulenzen durch eintretende Querströmungen innerhalb des Strömungskanals vermieden sind. Die mindestens eine Dichtungseinheit ist so angeordnet und ausgebildet, dass sie den Gasstrom nicht beeinflusst. Sie ist insbesondere als eine Ringdichtung mit identischem Innendurchmesser wie die daran anliegenden Einheiten ausgebildet. Die mindestens eine Dichtungseinheit ist vorteilhaft aus einem Gummi, insbesondere aus BR, NBR, oder EPDM und mittels Form- und/der Kraftschluss an die daneben angeordneten Einheiten anordenbar.

In Weiterbildung der Erfindung ist vorgesehen, dass die Steuereinheit einen Frequenzumrichter aufweist, wobei der Frequenzumrichter in einem Bereich der Umfangsgeschwindigkeit von 150 km/h bis 350 km/h, vorteilhaft von 200 km/h bis 300 km/h, besonders vorteilhaft auf 250 km/h kalibriert ist. Ein Frequenzumrichter ist kostengünstig und weist einen geringen Bauraum auf. Die Verwendung der kalibrierten Umfangsgeschwindigkeit von 250 km/h liegt mit Vorteil in einem mittleren Geschwindigkeitsbereich zwischen einem unteren Bereich, ab dem überhaupt erst die Geschwindigkeit des austretenden Gases einen beachtenswerten Einfluss auf das Motorrades ausübt, und einem oberen Bereich, der die maximale Umfangsgeschwindigkeit des Motorrad-Hinterrades darstellt.

Des Weiteren ist die Filtereinheit in vorteilhafter Weise als ein Lamellenfilter, insbesondere als ein Patronenfilter ausgebildet. Lamellenfilter, insbesondere Patronenfilter weisen eine sehr große Filterfläche bei einem kleinen Bauraum auf. Auch sind diese Filter handelsüblich in sämtlichen Ausbildungen erhältlich und ein zum Instandhalten der Strömungseinheit notwendiges Austauschen dieser ist demnach einfach und wenig kostenintensiv.

In Ausgestaltung der Erfindung ist vorgesehen, dass die Strömungseinheit eine Positioniereinheit aufweist, wobei die Positioniereinheit eine Höheneinheit zur Anpassung der Höhe und eine Tiefeneinheit zur Anpassung eines Abstandes zwischen Strömungseinheit und einem im Betriebszustand auf dem Rollenprüfstand befindlichen Motorrad aufweist. Sowohl die Höheneinheit, als auch die Tiefeneinheit sind vorteilhaft stufenlos einstellbar, sodass eine für eine Messung optimale Positionierung zwischen Strömungseinheit und dem im Betriebszustand auf dem Rollenprüfstand befindlichen Motorrad ausbildbar ist. Die Strömungseinheit ist mit Hilfe der Positioniereinheit für eine Vielzahl an unterschiedlichen Motorrädern auf dem Rollenprüfstand einsetzbar. Die Höheneinheit weist vorteilhaft eine Gelenkkonstruktion auf, mittels welcher die Höhe der Strömungseinheit einstellbar ist. Die Höheneinheit ist insbesondere händisch oder mittels eines Elektromotors verstellbar. Die Tiefeneinheit ist vorteilhafterweise als Gleiteinheit oder als Rolleneinheit ausgebildet, wobei die Strömungseinheit insbesondere zwei Gleitflächen oder ein Rollensystem aufweist. Die Gleitflächen sind in besonders vorteilhafterweise aus einem metallischen Werkstoff ausgebildet, da dieser korrosionsbeständig ist und eine glatte Oberfläche aufweist. Die Rollen sind in vorteilhafterweise aus einem Hartgummi und die Abrollfläche aus einem metallischen Werkstoff ausgebildet, um ein zuverlässiges und gleichmäßiges Rollen auszubilden. Die Höhen- und/oder die Tiefeneinheit weist weiter Feststelleinheiten zur Fixierung der Position der Strömungseinheit auf. Die Feststelleinheiten können eine form- und/oder kraftschlüssige Verbindung zwischen beweglichem und feststehendem Teil der Positioniereinheit ausbilden, insbesondere eine Verklemmung, eine Verschraubung oder eine Nut-Nabe-Verbindung.

Ein erfindungsgemäßes Verfahren zum Anströmen eines auf einem Rollenprüfstandes befindlichen Motorrades mit Verbrennungsmotor weist die folgenden Schritte auf:
- ortsfestes Beschleunigen eines auf einem Rollenprüfstandes befindlichen Motorrades und Messen der Umfangsgeschwindigkeit des Hinterrades des Motorrades;
- Erzeugen eines Gasstromes und Anströmen des Motorrades, wobei das Gas so beschleunigt und komprimiert wird, dass dessen Geschwindigkeit beim Austritt aus dem Rollenprüfstand der Umfangsgeschwindigkeit des Hinterrades entspricht.

In Ausgestaltung der Erfindung weist das Verfahren weiter mindestens einen der folgenden Schritte auf:
- Erzeugen einer laminaren Strömung des Anströmgases, nachdem das Gas beschleunigt und komprimiert wurde;
- Filtern des Gases vordem das Gas beschleunigt und komprimiert wird;
- Erzeugen von Steuersignalen für eine Vorrichtung zur Beschleunigung und Komprimierung des Gases und Steuern einer Antriebseinheit zur Beschleunigung und Komprimierung eines Gases in Abhängigkeit der Umfangsgeschwindigkeit des Hinterrades;
- Positionieren des Gasstromes in Bezug auf das auf dem Rollenprüfstandes befindlichen Motorrades.

In vorteilhafter Weise wird das Motorrad in einen Betriebszustand gebracht, in dem es auf eine Aufnahmeeinheit eines Rollenprüfstandes aufgefahren und dort über mindestens eine Befestigungseinheit befestigt wird. Dabei wird das Motorrad derart positioniert, dass dessen Hinterrad auf einer rotierbar gelagerten Walze angeordnet ist. Nachdem das Motorrad sich im Betriebszustand befindet, wird der Rollenprüfstand durch einen Nutzer über eine Bedieneinheit aktiviert. Das Hinterrad des Motorrades wird anschließend ortsfest beschleunigt und dessen Umfangsgeschwindigkeit, welche über die Drehfrequenz der Walze ausgerechnet wird, berechnet. Auf Grund der berechneten Umfangsgeschwindigkeit des Hinterrades des Motorrades wird über die Steuereinheit eine Strömungseinheit derart angesteuert, dass aus dieser ein Gas mit entsprechender Geschwindigkeit austritt und den Fahrtwind entsprechend der Umfangsgeschwindigkeit simuliert. Innerhalb der Strömungseinheit erreichen die Steuersignale einen Motor, welcher eine Antriebseinheit bildet und elektrische in kinetische Energie wandelt. Die kinetische Energie wird mit oder ohne Übersetzung an einen Diffusor übertragen. Sobald der Diffusor in Rotation gebracht wird, entsteht durch dessen Geometrie ein Gasstrom. Ein den Rollenprüfstand umgebendes Gas oder ein aus einer Leitung zugeführtes Gas wird dabei über eine Filtereinheit, welche Partikel aus dem Gas filtert, am Zentrum des Diffusors angesaugt und das Gas dabei beschleunigt. Das sich im Zentrum des Diffusors befindliche Gas strömt anschließend entlang einer Vielzahl an Schaufeln des Diffusors nach außen. Auf Grund des sich durch die Schaufeln ausgebildeten erweiternden Querschnitts wird die Geschwindigkeit des Gases reduziert und dessen Druck erhöht. Nach dem Austritt des Gases aus dem Diffusor strömt dieses über eine Ausströmeinheit in die Umgebung. Innerhalb der Ausströmeinheit wird der Gasstrom insbesondere durch einen Laminarfilter beruhigt, welcher turbulente Strömungen innerhalb des Gasstromes reduziert. Nach dem der Gasstrom aus der Ausströmeinheit ausgetreten ist, ist diese derart ausgerichtet, dass der Gasstrom gezielt in die Airbox des im Betriebszustand auf dem Rollenprüfstand befindlichen Motorrades strömt und dort einen Staudruck erzeugt. Die Abtastrate zur Anpassung der Geschwindigkeit des austretenden Gases in Bezug auf die Umfangsgeschwindigkeit beträgt mindestens 0,5 Sekunden, vorteilhaft 0,3 Sekunden, besonders vorteilhaft 0,1 Sekunden.

Die Erfindung wird nachfolgend anhand eines Ausführungsbeispiels mittels der Figuren näher erläutert, wobei
- **Fig. 1**: eine perspektivische Ansicht des Rollenprüfstandes,
- **Fig. 2**: eine perspektivische Detailansicht der Strömungseinheit,
- **Fig. 3**: eine Schnittansicht des Diffusors und der Ausströmeinheit zeigen.

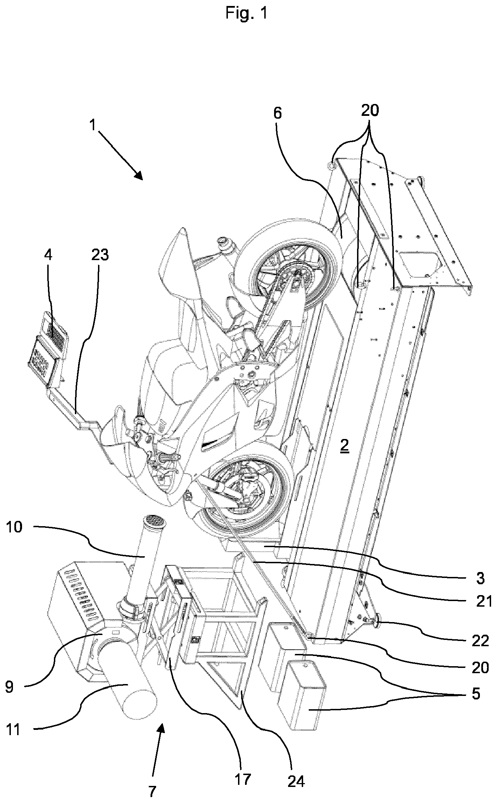

**Fig. 1** zeigt eine perspektivische Ansicht des Rollenprüfstandes 1, wobei der Rollenprüfstand 1 eine Aufnahmeinheit 2 aufweist, auf welcher im Betriebzustand ein Motorrad ortsfest angeordnet ist. Zur Fixierung des Motorrades weist die Aufnahmeeinheit 2 eine Befestigungseinheit 3 zur Halterung eines Vorderrades des Motorrades auf. Weiter weist der Rollenprüfstand 1 Befestigungseinheiten 3 in Form von an der Aufnahmeeinheit 2 angeordnete Befestigungsringe 20 und daran angeordnete Befestigungsgurte 21 auf, mittels welchen das Motorrad in einem Betriebszustand auf der Aufnahmeeinheit 2 fest spannbar ist. Befestigungsgurte 21 sind vorteilhaft, da diese eine Fixierung eines jeden Motorrads ermöglichen unabhängig von dessen Form oder Größe. Die Befestigungsgurte 21 sind zwischen dem Motorrad und der Aufnahmeeinheit 2 spannbar. Die Aufnahmeeinheit 2 weist weiter Füße 22 zum sicheren Stand auf, wobei die Füße 22 vorteilhaft höhenverstellbar sind, um Unebenheiten eines nicht dargestellten Bodens auszugleichen und damit einen sicheren Stand zu gewährleisten. Die Aufnahmeeinheit 2 ist vorteilhaft aus einer Metallblech-Konstruktion, was eine hohe Festigkeit und Steifigkeit erzeugt, das Gewicht allerdings im Vergleich zu einer massiven Metalleinheit deutlich verringert. In einem Betriebzustand befindet sich das Hinterrad des Motorrades auf einer Walze 6, welche zum Teil über die Aufnahmeeinheit 2 hinausragt und deren Rotationsachse innerhalb der Aufnahmeinheit 2 aufgenommen ist, um die Höhendifferenz zwischen Vorderrad und Hinterrad des Motorrades sowie das Einbringen des Motorrades auf die Aufnahmeinheit 2 zu vereinfachen. An der Aufnahmeeinheit 2 ist weiter eine Bedieneinheit 4 über einen gelenkig beweglichen Bedienarm 23 angeordnet, wobei die Bedieneinheit 4 eine Vielzahl an Tastern, Schaltern und einem Display aufweist. Unabhängig von der Aufnahmeeinheit 2 sind zwei Steuereinheiten 5 sowie eine Strömungseinheit 7 angeordnet, wobei die Strömungseinheit 7 neben einem Podest 24 eine Positioniereinheit 17, sowie eine Filtereinheit 11, eine nicht sichtbare Antriebseinheit 8, einen Diffusor 9 und eine Ausströmeinheit 10 aufweist, wobei die Ausströmeinheit 10 auf eine Front des im Betriebszustand auf dem Rollenprüfstand 1 befindlichen Motorrades gerichtet ist. Der Durchmesser der Ausströmeinheit 10 ist mindestens so groß, wie eine Öffnung einer Airbox eines im Betriebszustand auf dem Rollenprüfstand befindlichen Motorrades. Die Strömungseinheit 7 ist je nach Bedarf an die Aufnahmeeinheit 2 adaptierbar und durch ihren unabhängigen Stand individuell nutzbar.

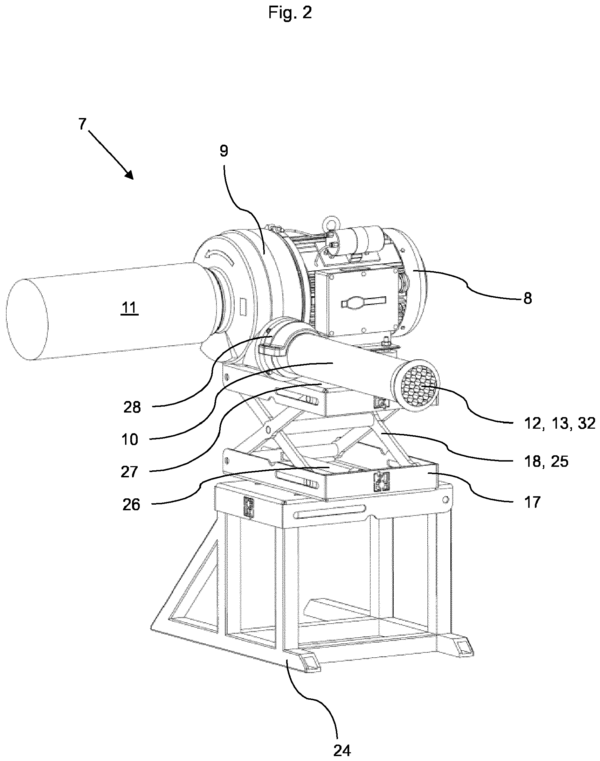

**Fig. 2** zeigt eine perspektivische Detailansicht der Strömungseinheit 7, wobei das Podest 24 die Strömungseinheit 7 auf eine entsprechende Grundhöhe anhebt und die Positioniereinheit 17 eine Höheneinheit 18 und eine nicht sichtbare Tiefeneinheit 19 aufweist, wobei die Höheneinheit 18 über ein X-förmiges Gelenk 25 ausgebildet ist und mittels einer Gewindestange 26 der Winkel zwischen den Schenkeln des X-förmiges Gelenk 25 und damit die Höhe der Strömungseinheit 7 einstellbar ist. Die Tiefeneinheit 19 ist vorteilhaft durch eine nicht sichtbare Gleiteinheit ausgebildet, wobei dadurch der Abstand zwischen der Strömungseinheit 7 und des im Betriebzustand auf dem Rollenprüfstand 1 befindlichen Motorrades einstellbar ist. Die Strömungseinheit 7 weist auf einer oberen Grundfläche 27 der Positioniereinheit 17 die Antriebseinheit 8 in Form eines Elektromotors sowie einen rotatorisch verbundenen und konzentrisch angeordneten Diffusor 9 auf, an welchem konzentrisch eine Filtereinheit 11 in Form eines Patronenfilters angeordnet ist. Im Wesentlichen orthogonal zur Filtereinheit 11 ist eine Ausströmeinheit 10 umfänglich an dem Diffusor 9 angeordnet, wobei die Ausströmeinheit 10 einen kreisrunden Querschnitt aufweist und über einen Flansch 28 am Diffusor 9 angeordnet ist. Die Ausströmeinheit 10 weist in vorteilhafter Weise eine geradlinige Länge ohne Krümmungen auf, um den Strömungsverlust innerhalb der Ausströmeinheit 10 möglichst gering zu halten und turbulente Strömungen zu minimieren. An einem Ende 13 der Ausströmeinheit 10 ist ein Laminarfilter 12 angeordnet, wobei dieser eine Vielzahl von Durchgangsöffnungen 32 mit wabenförmigen Querschnitten aufweist. Zwischen Filtereinheit 11 und Diffusor 9 sowie zwischen Diffusor 9 und Ausströmeinheit 10 ist jeweils mindestens eine nicht sichtbare Dichtungseinheit 16 angeordnet.

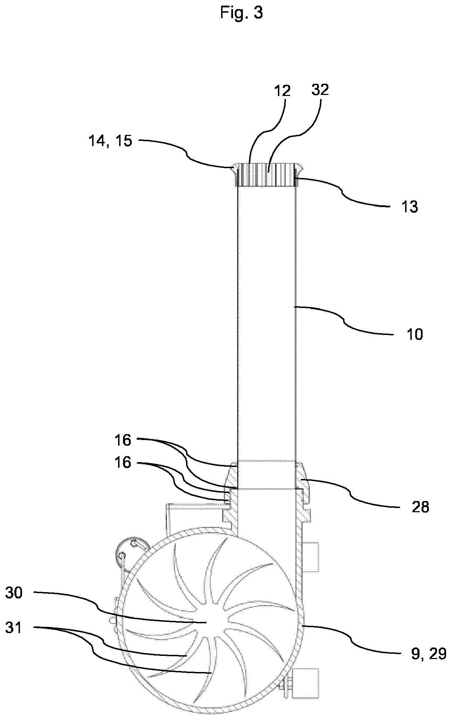

**Fig. 3** zeigt eine Schnittansicht des Diffusors 9 und der Ausströmeinheit 10, wobei der Diffusor 9 ein Diffusorgehäuse 29 und ein Diffursorrad 30 aufweist, welches einen sich nach außen vergrößernden Querschnitt zwischen seinen Schaufeln 31 aufweist. Der Abstand zwischen den Schaufeln 31 und dem Diffusorgehäuse 29 ist vorteilhaft möglichst gering zu wählen, um keine Toträume hinsichtlich des Gasstromes zu ermöglichen. Nachdem das Gas über die nicht dargestellte Filtereinheit 11 zentral auf das Diffusorrad 30 eintritt, wird es durch dessen Rotation nach außen und schließlich in die Ausströmeinheit 10 gefördert. Durch die nach außen ausgebildete Querschnittserweiterung zwischen den Diffusorrädern 30, verringert sich die Gasgeschwindigkeit und der Gasdruck erhöht sich. Die Ausströmeinheit 10 nimmt an ihrem Ende 13 den Laminarfilter 12 auf, wobei dieser eine Vielzahl von in Strömungsrichtung des Gases verlaufenden Durchgangsöffnungen aufweist und an einem Gehäuseaustrittsende 14 eine gekrümmte Fläche 15 zur Minimierung turbulenter Strömungen beim Austritt eines Gasstromes aus der Ausströmeinheit 10 aufweist. Die Ausströmeinheit 10 ist weiter über einen Flansch 28 an dem Diffusor 9 angeordnet. Zwischen Flansch 28 und Diffusor 9 sowie zwischen Flansch 28 und Ausströmeinheit 10 sind jeweils zwei Dichtungseinheiten 16 in Form von Dichtringen angeordnet. Die Ausströmeinheit 10 ist als ein Rohr aus einem Metall oder Kunststoff ausgebildet und weist einen kreisrunden Querschnitt auf.

### BEZUGSZEICHENLISTE

- 1: Rollenprüfstand
- 2: Aufnahmeeinheit
- 3: Befestigungseinheit
- 4: Bedieneinheit
- 5: Steuereinheit
- 6: Walze
- 7: Strömungseinheit
- 8: Antriebseinheit
- 9: Diffusor
- 10: Ausströmeinheit
- 11: Filtereinheit
- 12: Laminarfilter
- 13: Ende
- 14: Gehäuseaustrittsende
- 15: gekrümmte Fläche
- 16: Dichtungseinheit
- 17: Positioniereinheit
- 18: Höheneinheit
- 19: Tiefeneinheit
- 20: Befestigungsringe
- 21: Befestigungsgurte
- 22: Füße
- 23: Bedienarm
- 24: Podest
- 25: Gelenk
- 26: Gewindestande
- 27: obere Grundfläche
- 28: Flansch
- 29: Diffusorgehäuse
- 30: Diffusorrad
- 31: Schaufel
- 32: Durchgangsöffnung

## Patentansprüche

1. Rollenprüfstand (1) für Motoräder mit Verbrennungsmotor, aufweisend eine Aufnahmeeinheit (2), mindestens eine Befestigungseinheit (3), eine Bedieneinheit (4), eine Steuereinheit (5) und eine Walze (6) zur Aufnahme der Umfangsgeschwindigkeit eines Motorrad-Hinterrades, wobei der Rollenprüfstand (1) eine Strömungseinheit (7) aufweist, die ihrerseits eine Antriebseinheit (8), einen Diffusor (9) und eine, in Strömungsrichtung nach dem Diffusor (9) angeordnete, Ausströmeinheit (10) aufweist, wobei der Diffusor (9) und die Ausströmeinheit (10) einen im Betriebszustand gasführenden Strömungskanal bilden, wobei der Diffusor (9) von der Antriebseinheit (8) antreibbar ist, wobei die Steuereinheit (5) die Antriebseinheit (8) in Abhängigkeit von der Umfangsgeschwindigkeit der Walze (6) so ansteuernd ist, dass eine Geschwindigkeit des im Betriebszustand aus der Ausströmeinheit (10) austretenden Gases mindestens ab einer Umfangsgeschwindigkeit von 150 km/h im Wesentlichen gleich der Umfangsgeschwindigkeit ist.

2. Rollenprüfstand (1) nach Anspruch 1, **dadurch gekennzeichnet, dass** die Strömungseinheit (7) eine in Strömungsrichtung vor dem Diffusor (9) angeordnete Filtereinheit (11) aufweist, wobei die Filtereinheit (11) und/oder die Ausströmeinheit (10) lösbar mit dem Diffusor (9) verbindbar sind.

3. Rollenprüfstand (1) nach Anspruch 1 oder 2, **dadurch gekennzeichnet, dass** die Ausströmeinheit (10) einen kreisrunden Querschnitt und eine Länge von mindestens 0,3 m, vorzugsweise mindestens 0,5 m aufweist.

4. Rollenprüfstand (1) nach Anspruch 1, 2 oder 3, **dadurch gekennzeichnet, dass** die Ausströmeinheit (10) einen Laminarfilter (12) aufweist, wobei der Laminarfilter (12) an einem, vom Diffusor (9) entfernten, Ende (13) der Ausströmeinheit (10) angeordnet ist, wobei der Laminarfilter (12) oder die Ausströmeinheit (10) an einem Gasaustrittsende (14) eine gekrümmte Fläche (15) aufweist.

5. Rollenprüfstand (1) nach einem der vorhergehenden Ansprüche, **dadurch gekennzeichnet, dass** zwischen Filtereinheit (11) und Diffusor (9) und zwischen Diffusor (9) und Ausströmeinheit (10) mindestens eine Dichtungseinheit (16) angeordnet ist.

6. Rollenprüfstand (1) nach einem der vorhergehenden Ansprüche, **dadurch gekennzeichnet, dass** die Steuereinheit (5) einen Frequenzumrichter aufweist, wobei der Frequenzumrichter in einem Bereich der Umfangsgeschwindigkeit von 150 km/h bis 350 km/h, vorteilhaft von 200 km/h bis 300 km/h, besonders vorteilhaft auf 250 km/h kalibriert ist.

7. Rollenprüfstand (1) nach einem der vorhergehenden Ansprüche, **dadurch gekennzeichnet, dass** die Filtereinheit (11) als ein Lamellenfilter, insbesondere als ein Patronenfilter ausgebildet ist.

8. Rollenprüfstand (1) nach einem der vorhergehenden Ansprüche, **dadurch gekennzeichnet, dass** die Strömungseinheit (7) eine Positioniereinheit (17), aufweist, wobei die Positioniereinheit (17) eine Höheneinheit (18) zur Anpassung der Höhe und eine Tiefeneinheit (19) zur Anpassung eines Abstandes zwischen Strömungseinheit (17) und einem im Betriebszustand auf dem Rollenprüfstand befindlichen Motorrad aufweist.

9. Verfahren zum Anströmen eines auf einem Rollenprüfstandes (1) befindlichen Motorrades mit Verbrennungsmotor, aufweisend die Schritte:
- ortsfestes Beschleunigen eines auf einem Rollenprüfstandes (1) befindlichen Motorrades und Messen der Umfangsgeschwindigkeit des Hinterrades des Motorrades;
- Erzeugen eines Gasstromes und Anströmen des Motorrades, wobei das Gas so beschleunigt und komprimiert wird, dass dessen Geschwindigkeit der Umfangsgeschwindigkeit des Hinterrades entspricht.

10. Verfahren nach Anspruch 9, aufweisend mindestens einen der folgenden Schritte:
- Erzeugen einer laminaren Strömung des Anströmgases, nachdem das Gas beschleunigt und komprimiert wurde;
- Filtern des Gases vordem das Gas beschleunigt und komprimiert wird;
- Erzeugen von Steuersignalen für eine Vorrichtung zur Beschleunigung und Komprimierung des Gases und Steuern einer Antriebseinheit (8) zur Beschleunigung und Komprimierung eines Gases in Abhängigkeit der Umfangsgeschwindigkeit des Hinterrades;
- Positionieren des Gasstromes in Bezug auf das auf dem Rollenprüfstandes befindlichen Motorrades.
